(19) Europäisches Patentamt
European Patent Office
Office européen des brevets

(11) EP 2 352 636 B1

(12) # FASCICULE DE BREVET EUROPEEN

(45) Date de publication et mention de la délivrance du brevet:
**30.05.2018 Bulletin 2018/22**

(21) Numéro de dépôt: **09760890.5**

(22) Date de dépôt: **01.12.2009**

(51) Int Cl.:
***B29C 67/00*** (2017.01) ***B29K 101/12*** (2006.01)
***B33Y 70/00*** (2015.01) ***B29C 64/153*** (2017.01)

(86) Numéro de dépôt international:
**PCT/EP2009/066103**

(87) Numéro de publication internationale:
**WO 2010/063691 (10.06.2010 Gazette 2010/23)**

(54) **REALISATION D'ARTICLE PAR FUSION SELECTIVE DE COUCHES DE POUDRE DE POLYMERE**

HERSTELLUNG EINES OBJEKTS DURCH DIE SELEKTIVE FUSION VON POLYMEREN PULVERSCHICHTEN

PRODUCING AN ITEM BY THE SELECTIVE FUSION OF POLYMER POWDER LAYERS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **01.12.2008 FR 0806730**

(43) Date de publication de la demande:
**10.08.2011 Bulletin 2011/32**

(73) Titulaire: **Rhodia Opérations**
**93306 Aubervilliers (FR)**

(72) Inventeurs:
- **LUCAS, Pierre-Emmanuel**
**F-69270 Couzon (FR)**
- **CORRIOL, Cécile**
**F-69003 Lyon (FR)**

(74) Mandataire: **Schuck, Alexander et al**
**Isenbruck Bösl Hörschler LLP**
**Patentanwälte**
**EASTSITE ONE**
**Seckenheimer Landstraße 4**
**68163 Mannheim (DE)**

(56) Documents cités:
**EP-A- 1 460 108**
**FR-A- 2 907 366**
**US-A- 6 136 948**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 352 636 B1

## Description

La présente invention concerne un procédé de fabrication d'articles par fusion sélective de couches de poudre de polymères, notamment par prototypage rapide par frittage en phase solide à l'aide d'un laser, d'une poudre à base de polymères thermoplastiques, présentant des caractéristiques de granulométrie et de distribution particulières.

Le frittage est un procédé qui permet d'obtenir des pièces de formes complexes sans outillage et sans usinage, à partir d'une image en trois dimensions de l'article à réaliser, en frittant des couches superposées de poudres polymériques, notamment à l'aide d'un laser. On utilise généralement pour ce faire des polymères thermoplastiques. Des généralités sur le prototypage rapide par frittage laser sont mentionnées dans les brevets US6136948 et les demandes WO96/06881, US20040138363.

Le document FR 2 907 366 décrit un procédé de fabrication par fusion d'une poudre selon le préambule de la revendication 1.

Dans le but de réaliser des articles en polyamide par frittage, il est connu d'utiliser des poudres à base de polyamide 12 présentant une granulométrie d50 comprise entre 50 et 150 $\mu$m. Ces poudres présentent des particules ayant des tailles similaires et ainsi une distribution des tailles de particules étroite. Il apparait que l'utilisation de ces particules conduit à la fabrication d'articles par un procédé de prototypage rapide par frittage en phase solide, à l'aide d'un laser, présentant une hétérogénéité des propriétés mécaniques sur l'ensemble de l'article et un aspect de surface insuffisant.

Il existait ainsi un besoin de remédier à ces inconvénients.

La demanderesse a découvert de manière tout a fait surprenante que l'utilisation de poudres à base de polymères thermoplastiques présentant des caractéristiques particulières au niveau de la distribution granulométrique, de la sphéricité et de la porosité intra-particulaire permet la réalisation d'articles par fusion sélective de couches de poudre de polymère, notamment par prototypage rapide utilisant un laser, ayant une densité élevée et une grande uniformité des propriétés mécaniques. Par ailleurs, ces articles présentent un bon aspect de surface. L'utilisation de ces poudres particulières permet même la réalisation d'articles par frittage en matériau polyamide non utilisé à ce jour, notamment en polyamide 6 ou 66.

La présente invention a ainsi pour premier objet un procédé de fabrication d'article façonné par fusion sélective de couches d'une poudre à base de polymères thermoplastiques selon la revendication 1. On entend par poudre un assemblage de particules de polymère obtenu selon le procédé indiqué précédemment.

La distribution granulométrique des objets est obtenue par mesure de diffraction laser sur un granulomètre de chez Malvern, en utilisant le module en voie humide. Les grandeurs utilisées dans ce document concernent le d10, le d50 et le d90. La maille d10 est la dimension telle que 10% des particules sont plus petites que cette dimension et 90% des particules sont plus grandes que cette dimension. La maille d50 est la dimension telle que 50% des particules sont plus petites que cette dimension et 50% des particules sont plus grandes que cette dimension. La maille d90 est la dimension telle que 90% des particules sont plus petites que cette dimension et 10% des particules sont plus grandes que cette dimension. Le coefficient de variation quantifiant l'étendue de la distribution sera défini tel que:

$$CV = \frac{(d90 - d10)}{d50}$$

L'analyse granulométrique par diffraction laser est réalisée selon les indications de la norme AFNOR ISO 13320-1.

Le facteur de sphéricité est mesuré de la manière suivante : Pour quantifier la sphéricité des objets, on procède de la façon suivante par analyse d'images. Sur au minium 100 objets, on mesure les longueurs caractéristiques des petits et grands diamètres pour chaque objet. Pour chaque objet, le facteur de sphéricité est défini comme le rapport du petit diamètre sur le grand diamètre. Pour une sphère parfaite, le rapport est de 1. Pour des grains de morphologie variable, ce rapport est inférieur à 1 et tend vers 1 lorsque l'on se rapproche de la sphéricité parfaite. Sur 100 objets prélevés, on calcule le facteur de sphéricité selon le rapport des diamètres, puis on effectue la moyenne des facteurs de sphéricité. Pour ce faire, de manière connue en soi, l'échantillon des particules est dispersé sur une plaque de verre placée sous un microscope optique et les longueurs caractéristiques sont relevées l'une après l'autre.

Ainsi, selon l'invention les particules sont sous forme essentiellement sphérique.

La porosité intra-particulaire est mesurée de la manière suivante : La texture poreuse des objets est déterminée par porosimétrie mercure à l'aide d'un appareil Autopore IV de la société Micromeritics. Il s'agit d'une méthode basée sur l'intrusion de mercure dans le réseau poreux intergranulaire et intragranulaire. Cette intrusion est gérée via une montée en pression. La gamme de pression (P) utilisée est de 0,003 MPa à 400 MPa. Par l'équation de Washburn, on relie facilement le diamètre des pores (2r) à la pression appliquée:

$$r = (-)\frac{2.\gamma_{LV}\,.\,\cos\Theta}{P}$$

Les paramètres pris en compte pour le mercure sont respectivement: $485.10^{-5}$ N/cm pour la tension superficielle $\gamma_{LV}$ et 130° pour la valeur de l'angle de mouillage $\Theta$. Les résultats sont présentés en volume de mercure introduit par gramme d'échantillon en fonction de la pression, donc du diamètre des pores, appliquée. La porosité intra-particulaire correspond à l'intrusion de mercure dans des pores de taille inférieure à 0,1 $\mu$m d'une particule. La porosimétrie mercure est une notion technique qui est bien connue de l'homme de métier; pour plus de détails, on peut se reporter notamment à l'article: Gomez F., Denoyel R., Rouquerol J., Langmuir, 16, 3474 (2000).

La porosimétrie mercure permet aussi d'accéder aux valeurs de surface spécifique en considérant que les pores sont cylindriques, selon l'équation suivante:

$$A = -\frac{PV}{\gamma\,\cos\Theta}$$

avec A et V, la surface et le volume des pores, respectivement et P, la pression appliquée. Plus de détails sont donnés dans l'article: Washburn E.W., Proc. Nat. Acad. Sci., 7, 115-6 (1921). Il a été vérifié mathématiquement (voir document technique de Micromeritic) que la surface spécifique calculée à partir du travail à fournir pour immerger une surface dans le mercure est identique à celle dont le calcul considère que les pores sont cylindriques. Plus de détails sur le calcul du travail nécessaire à l'immersion d'une surface dans le mercure sont donnés dans l'article: Rootare H.M., Prenzlow C.F, J. Phys. Chem., 71, 2733-6 (1967).

La poudre selon l'invention présente une porosité intra-particulaire inférieure à 0,05 ml/g, pour des tailles de pores comprises entre 0.01$\mu$m et 1$\mu$m.

La coulabilité des poudres est mesurée par cisaillement d'un échantillon par cellule annulaire (commercialisée par D. Schulze, Allemagne). Le pré-cisaillement des poudres est effectué sur une cellule d'une surface de 81 $cm^2$ avec une contrainte normale équivalente à une masse de 4,3 kg. Les points de cisaillement pour tracer le lieu d'écoulement de l'échantillon sont obtenus pour 4 contraintes inférieures à la contrainte du pré-cisaillement, typiquement pour des contraintes équivalentes en masse à 0,4-0,7-1,7-2,5 kg. A partir des cercles de Mohr, dans un diagramme contrainte de cisaillement en fonction des contraintes normales, on obtient sur le lieu d'écoulement deux contraintes ; l'une est l'extrémité du grand cercle de Mohr qui passe par le point de cisaillement et est appelé contrainte normale dans la direction principale, l'autre est l'extrémité du petit cercle de Mohr, cercle tangent au lieu d'écoulement et passant par l'origine, que l'on nommera force de cohésion. Le rapport contrainte normale dans la direction principale sur la force de cohésion est un nombre adimensionnel, l'indice de coulabilité. D'après l'échelle de Jenike, il est possible de classer la coulabilité des poudres en fonction des valeurs de l'indice:

| | |
|---|---|
| i<2 | Produit très cohésif, ne coule pas |
| 2<i<4 | Produit cohésif |
| 4<i<10 | Produit coulant facilement |
| i>10 | Produit d'écoulant librement ou "free-flowing" |

La coulabilité des poudres est une notion technique qui est également bien connue de l'homme de métier; pour plus de détails, on peut se reporter notamment à l'ouvrage: "Standard shear testing technique for particulate solids using the Jenike shear cell", publié par "The institution of Chemical Engineers", 1989 (ISBN: 0 85295 232 5).

La densité tapée est mesurée de la façon suivante: la poudre est versée dans une éprouvette graduée en verre de 250 ml, préalablement tarée. Le haut de l'éprouvette est arasé. L'éprouvette pesée est disposée sur le voluménomètre et le niveau du lit de poudre est lu sur la graduation de l'éprouvette après 2048 coups. La densité tapée est obtenue avec l'équation suivante:

$$d = \frac{masse\ (kg)}{volume\ lu\ \left(m^3\right)}$$

Le test est conforme à celui reporté dans les textes d'European pharmacopeia, 1997.

La poudre selon l'invention peut être obtenue de diverses manières connues de l'homme du métier en fonction des matériaux utilisés. On peut notamment citer par exemple les documents EP1797141 et WO2007/115977.

Ladite poudre peut notamment être fabriqué par :

a) mélange en fondu d'un polymère thermoplastique avec un composé A constitué par un matériau polymérique comprenant au moins une partie de sa structure compatible avec ledit polymère thermoplastique et au moins une partie de sa structure non compatible et insoluble dans ledit polymère thermoplastique, pour obtenir une dispersion de particules discrètes de polymère thermoplastique ;
b) refroidir ledit mélange à une température inférieure à la température de ramollissement du polymère thermoplastique,
c) traiter ledit mélange refroidi pour provoquer le délitement des particules de polymère thermoplastique.

La formation du mélange est notamment obtenue par fusion du polymère thermoplastique et addition du composé A sous forme solide ou fondu et application d'une énergie de mélange pour obtenir la formation des particules discrètes de polymère thermoplastique dispersées dans une phase avantageusement continue formée par le composé A. Ce mélange peut également être obtenu par mélange à l'état solide de particules dudit polymère thermoplastique et des particules dudit additif A, et fusion du mélange de particules avec application sur le mélange fondu d'une énergie de mélange pour obtenir la formation de particules discrètes de polymère thermoplastique dispersées dans une phase avantageusement continue formée par le composé A.

La concentration pondérale en additif A dans le mélange peut être comprise entre 10 % et 50 %, avantageusement entre 20 % et 30 %.

Plus généralement, le mélange peut être obtenu par tout dispositif convenable tel que les mélangeurs à vis sans fin ou à agitateurs compatibles avec les conditions de température et de pression utilisées pour la mise en oeuvre des matériaux thermoplastiques.

Selon un mode de réalisation préféré de l'invention, le mélange fondu est mis en forme avant l'étape de refroidissement, par exemple sous forme de filaments ou joncs. Cette mise en forme peut être avantageusement réalisée par un procédé d'extrusion à travers une filière.

Selon un mode de réalisation préféré de l'invention, notamment quand le mélange fondu est mis en forme, ce mélange fondu est préférentiellement réalisé dans une extrudeuse alimentant la filière d'extrusion.

Le refroidissement du mélange fondu peut être réalisé par tout moyen approprié. Parmi ceux-ci, le refroidissement pneumatique ou le trempage dans un liquide sont préférés.

L'étape de récupération de la poudre de polymère thermoplastique consiste avantageusement, en un traitement de délitement des particules discrètes de polymère thermoplastique. Ce délitement peut être obtenu par application d'une force de cisaillement sur le mélange refroidi. Le délitement des particules de polymère thermoplastique peut être aussi obtenu par trempage du mélange fondu refroidi dans un liquide, non solvant du polymère thermoplastique et avantageusement solvant de l'additif A.

On peut citer comme polymère thermoplastiques, les polyoléfines, notamment le polyéthylène et le polypropylène, les polychlorures de vinyle, les polyéthylènes téréphtalate, les polystyrènes, les polyamides, les acryliques. On préfère notamment les polymères thermoplastiques semi-cristallins.

Le polyamide est particulièrement préféré.

Tout polyamide connu de l'homme du métier peut être utilisé dans le cadre de l'invention. Le polyamide est généralement un polyamide du type de ceux obtenus par polycondensation à partir de diacides carboxyliques et de diamines, ou du type de ceux obtenus par polycondensation de lactames et/ou aminoacides. Le polyamide de l'invention peut être un mélange de polyamides de différents types et/ou du même type, et/ou des copolymères obtenus à partir de différents monomères correspondant au même type et/ou à des types différents de polyamide.

A titre d'exemple de polyamide pouvant convenir pour l'invention, on peut citer le polyamide 6, le polyamide 6,6, le polyamide 11, le polyamide 12, les polyamides 4,6 ; 6,10 ; 6,12 ; 12,12, 6,36 ; les polyamides semi-aromatiques, par exemple les polyphtalamides obtenus à partir d'acide téréphtalique et/ou isophtalique tels que le polyamide commercialisé sous le nom commercial AMODEL, leurs copolymères et alliages. Selon un mode de réalisation préférentiel de l'invention, le polyamide est choisi parmi le polyamide 6, le polyamide 6,6, leurs mélanges et copolymères. Le polyamide peut également être un polymère comprenant de telles chaînes macromoléculaires étoiles, tels que ceux décrits dans les documents FR2743077, FR2779730, US5959069, EP632703, EP682057 et EP832149. Ces composés sont connus pour présenter une fluidité améliorée par rapport à des polyamides linéaires de même masse moléculaire.

L'additif A est avantageusement, un polymère du type bloc, séquencé, peigne, hyperbranché ou étoile. Ainsi, la structure compatible avec le polyamide forme un bloc, une séquence, le squelette ou les dents du peigne, le coeur ou les branches du polymère étoile ou de l'hyperbranché.

Selon un mode de réalisation préféré de l'invention, la structure compatible de l'additif A comprend des fonctions chimiquement identiques à celles du polyamide.

Selon le mode de réalisation préféré de l'invention, l'additif A est choisi dans le groupe constitué par un polymère D défini ci-dessous ou un polymère hyperbranché E comprenant préférentiellement au moins un bloc de polyoxyde

d'alkylène.

Ledit polymère D est un polymère à propriétés thermoplastiques comprenant un bloc de polymère thermoplastique et au moins un bloc de polyoxyde d'alkylène tels que :

- le bloc de polymère thermoplastique comprend une chaîne macromoléculaire étoile ou H comprenant au moins un coeur multifonctionnel et au moins une branche ou un segment de polymère thermoplastique relié au coeur, le coeur comprenant au moins trois fonctions réactives identiques
- le ou les blocs de polyoxyde d'alkylène sont reliés à au moins une partie des extrémités libres de la chaîne macromoléculaire étoile ou H, choisie parmi les extrémités de branche ou segment de polymère thermoplastique et les extrémités du coeur multifonctionnel

De tels polymères thermoplastiques et leur procédé d'obtention sont notamment décrits dans le document WO 03/002668. La chaîne macromoléculaire étoile du polymère D est avantageusement un polyamide étoile obtenu par copolymérisation à partir d'un mélange de monomères comprenant :

a) un composé multifonctionnel comprenant au moins trois fonctions réactives identiques choisies parmi la fonction amine et la fonction acide carboxylique
b) des monomères de formules générales (IIa) et/ou (IIb) suivantes :

$$X\text{-}R_1\text{-}Y \qquad \text{(IIa)}$$

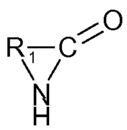
(IIb)

c) le cas échéant des monomères de formule générale (III) suivante :

$$Z\text{-}R_2\text{-}Z \qquad \text{(III)}$$

dans lesquelles :

- Z représente une fonction identique à celle des fonctions réactives du composé multifonctionnel
- $R_1$, $R_2$ représentent des radicaux hydrocarbonés aliphatiques, cycloaliphatiques ou aromatiques, ou arylaliphatique substitués ou non, identiques ou différents, comprenant de 2 à 20 atomes de carbone, et pouvant comprendre des hétéroatomes,
- Y est une fonction amine primaire quand X représente une fonction acide carboxylique, ou
- Y est une fonction acide carboxylique quand X représente une fonction amine primaire,

La chaîne macromoléculaire H du bloc de polymère thermoplastique du polymère D est avantageusement un polyamide H obtenu par copolymérisation à partir d'un mélange de monomères comprenant :

a) un composé multifonctionnel comprenant au moins trois fonctions réactives identiques choisies parmi la fonction amine et la fonction acide carboxylique
b) des lactames et/ou amino-acides
c) un composé difonctionnel choisi parmi les acides dicarboxyliques ou les diamines,
d) un composé monofonctionnel dont la fonction est soit une fonction amine soit une fonction acide carboxylique,

les fonctions de c) et d) étant amine lorsque les fonctions de a) sont acide, les fonctions de c) et d) étant acide lorsque les fonctions de a) sont amine, le rapport en équivalents entre les groupements fonctionnels de a) et la somme des groupements fonctionnels de c) et d) étant compris entre 1,5 et 0,66, le rapport en équivalents entre les groupements fonctionnels de c) et les groupements fonctionnels de d) étant compris entre 0,17 et 1,5.

Avantageusement, le composé multifonctionnel des chaînes macromoléculaires étoile ou H est représenté par la formule (IV)

$$R1 \left[ A - z \right]_m \qquad (IV)$$

dans laquelle :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un radical acide carboxylique
- m est un nombre entier compris entre 3 et 8.

De préférence le composé multifonctionnel est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

Le bloc de polyoxyde d'alkylène POA du polymère D est de préférence linéaire. Il peut être choisi parmi les blocs polyoxyde d'éthylène, polytriméthylène oxyde, polytetraméthylène oxyde. Dans le cas où le bloc est à base de polyoxyde d'éthylène, il peut comporter, aux extrémités, du bloc des motifs propylène glycol. Le bloc de polyoxyde d'alkylène du polymère D est de préférence un bloc de polyoxyde d'éthylène.

Avantageusement toutes les extrémités libres de la chaîne macromoléculaire du bloc de polymère thermoplastique du polymère D sont reliées à un bloc de polyoxyde d'alkylène.

Par polymère hyperbranché E selon l'invention, on entend une structure polymérique ramifiée obtenue par polymérisation en présence de composés ayant une fonctionnalité supérieure à 2, et dont la structure n'est pas parfaitement contrôlée. Il s'agit souvent de copolymères statistiques. Les polymères hyperbranchés peuvent par exemple être obtenus par réaction entre, notamment, des monomères plurifonctionnels, par exemple trifonctionnels et bifonctionnels, chacun des monomères étant porteur d'au moins deux fonctions réactives différentes de polymérisation.

Avantageusement le polymère hyperbranché E de l'invention est choisi parmi les polyesters, les polyesteramides et les polyamides hyperbranchés.

Le polymère hyperbranché E de l'invention est de préférence un copolyamide hyperbranché du type de ceux obtenus par réaction entre :

- au moins un monomère de formule (I) suivante :

  (I) $A\text{-}R\text{-}B_f$

  dans laquelle A est une fonction réactive de polymérisation d'un premier type, B est une fonction réactive de polymérisation d'un second type et capable de réagir avec A, R est une entité hydrocarbonée, et f est le nombre total de fonctions réactives B par monomère : $f \geq 2$, de préférence $2 \leq f \leq 10$ ;
- au moins un monomère de formule (II) suivante :

  (II) A'-R'-B' ou les lactames correspondants,

  dans laquelle A', B', R' ont la même définition que celle donnée ci-dessus respectivement pour A, B, R dans la formule (I)
- éventuellement au moins un monomère « coeur » de formule (III) suivante et/ou au moins un monomère « limiteurs de chaîne » de formule (IV) suivante :

  (III) $R^1(B'')_n$

  dans laquelle :

  - $R_1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
  - B" est une fonction réactive de même nature que B ou B' ;
  - $n \geq 1$, de préférence $1 \leq n \leq 100$

  (IV) $R^2\text{-}A''$

dans laquelle :

- $R_2$ est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.
- et A" est une fonction réactive de même nature que A ou A'.

le rapport molaire I/II se définissant comme suit :

$$0,05 < I/II$$

et de préférence

$$0,125 \leq I/II \leq 2 ;$$

au moins l'une des entités R ou R' d'au moins l'un des monomères (I) ou (II) étant aliphatique, cycloaliphatique ou arylaliphatique
$R_1$ et/ou $R_2$ étant des radicaux polyoxyalkylènes

De tels copolyamides sont décrits dans le document WO0068298, notamment à la page 11 lignes 3 à 6.

Les fonctions réactives de polymérisation A, B, A', B' sont avantageusement choisies dans le groupe comprenant les fonctions carboxyliques et amines.

Le monomère de formule (I) du copolyamide hyperbranché est avantageusement un composé dans lequel A représente la fonction amine, B la fonction carboxylique, R un radical aromatique et f = 2.

$R_1$ et/ou $R_2$ sont avantageusement des radicaux polyoxyalkylènes aminés de type Jeffamine®.

On utilise préférentiellement comme additif A les composés choisis dans le groupe comprenant : les copolymères bloc d'oxyde d'éthylène et d'oxyde de propylène (Pluronic® et Synperonic®), et les polyalkylènes amines (Jeffamine®). La composition, outre le polymère thermoplastique et l'additif A, peut comprendre d'autres composés.

Dans un mode de réalisation de l'invention, l'additif A est utilisé en combinaison avec un composé B qui est insoluble et non compatible avec le polymère thermoplastique. Avantageusement ce composé B présente une structure chimique compatible avec au moins une partie de la structure du composé A, notamment la partie de structure non compatible avec le polymère thermoplastique. Comme exemple de composés B convenables pour l'invention, on peut citer les composés appartenant aux familles des polysaccharides, polyoxyalkylènegycols, polyoléfines. Le composé B peut être ajouté de manière séparée du composé A ou sous forme de mélange avec au moins une partie du composé A.

Il peut également être pré mélangé avec le polymère thermoplastique.

Toute méthode connue de l'homme du métier pour préparer un mélange peut être utilisée pour préparer le mélange selon l'invention. On peut par exemple réaliser un mélange intime des granulés de polymère thermoplastique et de l'additif A, ou un mélange des granulés de polymère thermoplastique et des granulés de l'additif A. Le polymère thermoplastique peut également se présenter sous la forme de granulés, que l'on enrobe par l'additif. L'additif A peut être introduit dans le polymère thermoplastique lors du procédé de polymérisation, avantageusement en fin de polymérisation. Il est également possible d'introduire l'additif A dans le polymère à l'état fondu.

L'étape a) consiste à préparer le mélange à l'état fondu, sous agitation.

Cette étape est avantageusement réalisée dans tout dispositif de malaxage compatible avec les conditions de pression et température de mise en oeuvre des matériaux thermoplastiques. L'étape a) est de préférence réalisée dans une extrudeuse, encore plus préférentiellement dans une extrudeuse bi-vis ou multivis.

Le mélange peut être préparé selon un mode décrit ci-dessus, puis introduit dans le dispositif d'extrusion mis en oeuvre lors de l'étape a). Le mélange peut être introduit sous forme solide ou liquide, par exemple à l'état fondu.

Le mélange peut également être préparé *in situ* dans le même dispositif d'extrusion que celui mis en oeuvre lors de l'étape a).

L'agitation lors de l'étape a) permet un cisaillement de la composition et un mélange efficace du polymère thermoplastique et de l'additif A. L'énergie de cisaillement appliquée est déterminée en fonction de la nature des produits à mélanger et de la taille souhaitée des particules de polymère thermoplastique.

Le mélange, avant d'être refroidi selon l'étape b), peut être extrudé à travers une filière pour être mise en forme de jonc, de fil, de film d'une manière classique et connue de l'homme du métier.

L'étape b) consiste à refroidir le mélange pour solidifier au moins le polymère thermoplastique. Ce refroidissement peut être réalisé de manière classique à l'aide d'air ou d'eau.

L'étape de délitement des particules de polymère thermoplastique à partir du mélange refroidi peut être mise

en oeuvre selon différents procédés.

Ainsi, un premier procédé consiste en l'application d'une force mécanique , telle qu'un frottement, un cisaillement, une torsion, nécessaire pour provoquer ce délitement ;

Dans un autre mode de réalisation, le délitement intervient instantanément quand le mélange refroidi est introduit dans un liquide tel que de l'eau, par exemple.

Dans, encore un autre mode de réalisation, le liquide est avantageusement un solvant de l'additif A. Ainsi, il est possible de récupérer, en grande partie, l'additif A pour pouvoir, par exemple le réutiliser. De plus, la poudre de polymère thermoplastique comprendra une quantité plus faible d'impuretés ou d'additif A.

Dans d'autre cas, il peut être intéressant de ne pas éliminer l'additif A qui restera présent à la surface des particules de polymère thermoplastique, modifiant ainsi les propriétés de surface de ces particules.

Avantageusement les étapes b) et c) sont réalisées simultanément. Par exemple on peut introduire le mélange après extrusion à travers une filière directement dans un réacteur comprenant un solvant de l'additif A et un non-solvant du polymère thermoplastique.

Les particules de polymère thermoplastique sont éventuellement isolées de la solution solvant/additif A. L'isolement peut être réalisée par tout moyen permettant de séparer d'une phase liquide, une phase solide en suspension. L'isolement peut consister par exemple en une filtration, une décantation, une centrifugation, une atomisation.

S'il s'agit par exemple d'une dispersion aqueuse, l'isolement peut être réalisé par exemple par atomisation pour récupérer une poudre comprenant des particules élémentaires de taille équivalente à celles présentes dans la dispersion et/ou des agrégats de particules. Ces agrégats sont généralement facilement redispersables dans un milieu tel que l'eau ou cassés par application de vibrations sur la poudre. D'autres moyens d'élimination de l'eau ou récupération de la poudre peuvent être utilisés tels que la filtration ou la centrifugation puis le séchage du gâteau de filtration.

Les particules de polymère thermoplastique ainsi obtenues peuvent être lavées et séchées.

Le procédé de l'invention permet l'obtention de particules à géométrie contrôlée, notamment en ajustant l'agitation lors de l'étape a), la nature des composés A et/ou B, la température et la concentration des différents composants du mélange.

La poudre présente une porosité intra-particulaire inférieure à 0,05 ml/g, préférentiellement inférieure à 0,02 ml/g, notamment pour des tailles de pores supérieures ou égales à 0,01 $\mu$m.

La poudre selon l'invention présente un facteur de sphéricité compris entre 0,8 et 1, préférentiellement entre 0,85 et 1, plus préférentiellement entre 0,9 et 1.

La poudre selon l'invention présente avantageusement une coulabilité comprise entre 30 et 60. La coulabilité de la poudre peut notamment être modifiée par ajout de divers additifs, tel que par exemple de la silice.

La poudre selon l'invention peut aussi présenter une densité apparente comprise entre 500 et 700 g/l et une densité tapé comprise entre 550 et 800 g/l.

Les compositions utilisées selon l'invention, ainsi que les articles obtenus, peuvent contenir un ou plusieurs additifs ou composés choisis dans le groupe comprenant les matifiants, les stabilisants chaleur, les stabilisants lumière, les pigments, les colorants, les charges de renfort, notamment des charges abrasives, les nucléants, et les agents de renfort du choc. A titre d'exemple, on peut notamment citer l'oxyde de titane, l'oxyde de zinc, l'oxyde de cérium, la silice ou le sulfure de zinc utilisés comme matifiant et/ou abrasif.

La fabrication par fusion sélective de couches est un procédé de fabrication d'articles consistant à déposer des couches de matériaux sous forme de poudre, à fondre de manière sélective une partie ou un domaine d'une couche, et de venir déposer une nouvelle couche de poudre et de fondre de nouveau une partie de cette couche et ainsi de suite de manière à obtenir l'objet désiré. La sélectivité de la partie de la couche à fondre est obtenue par exemple grâce à l'utilisation d'absorbeurs, d'inhibiteurs, de masques, ou à travers l'apport d'énergie focalisée, comme par exemple un rayon laser ou électromagnétique.

On préfère notamment le frittage par additivation de couches, particulièrement le prototypage rapide par frittage à l'aide d'un laser.

Le prototypage rapide est un procédé qui permet d'obtenir des pièces de formes complexes sans outillage et sans usinage, à partir d'une image en trois dimensions de l'article à réaliser, en frittant des couches superposées de poudres à l'aide d'un laser. Des généralités sur le prototypage rapide par frittage laser sont mentionnées dans les brevets US6136948 et les demandes WO96/06881, US20040138363.

Les machines permettant la réalisation de ces procédés sont composées d'une chambre de construction sur un piston de fabrication, entourée à gauche et à droite par deux pistons fournissant la poudre, d'un laser, et d'un moyen pour étaler la poudre, tel qu'un rouleau. La chambre est généralement maintenue à une température constante pour éviter les déformations.

A titre d'exemple, la poudre est d'abord étalée en couche uniforme sur toute la chambre, le laser trace alors la section 2D sur la surface de la poudre, la frittant ainsi. Des caches peuvent être également utilisés. Le piston de fabrication descend de l'épaisseur d'une strate tandis qu'un des pistons d'approvisionnement en poudre monte. Une nouvelle couche de poudre est étalée sur tout la surface et le processus se répète jusqu'à ce que la pièce soit terminée.

La pièce doit ensuite être retirée précautionneusement de la machine et nettoyée de la poudre non frittée qui l'entoure. Il existe d'autres machines ou la poudre n'arrive pas par le bas grâce à des piston, mais par le haut. Cette méthode permet de gagner du temps car on n'est alors pas obligé d'arrêter la fabrication des pièces pour réapprovisionner la machine en poudre.

D'autres procédés de fabrication par addition de couches tels que ceux décrits dans les brevets WO 01/38061 et EP1015214 sont aussi appropriés. Ces deux procédés utilisent un chauffage infra rouge pour fondre la poudre. La sélectivité des parties fondues est obtenue dans le cas du premier procédé grâce à l'utilisation d'inhibiteurs, dans le cas du second procédé grâce à l'utilisation d'un masque. Un autre procédé est décrit dans la demande DE10311438. Dans ce procédé, l'énergie pour fondre le polymère est apportée par un générateur de micro-ondes et la sélectivité est obtenue par l'utilisation d'un "suscepteur".

D'autres détails ou avantages de l'invention apparaîtront plus clairement au vu des exemples donnés ci-dessous uniquement à titre indicatif.

## PARTIE EXPERIMENTALE

### Exemple 1 : fabrication de poudre

Les matières utilisées sont les suivantes:

- Polymère P: PA 6 TechnylStar® commercialisé par Rhodia de viscosité relative 2.14 dans l'acide sulfurique.
- Additif A: Pluronic F108 commercialisé par BASF
- Compound B: Mélange maitre du polymère P avec 0,5 % en masse de $TiO_2$ commercialisé par BASF (grade PC1 N).

On introduit dans une extrudeuse double vis 24D de types Prism, commercialisée par la Société Thermo Electron Corporation, le compound B à l'aide d'une alimentation volumétrique et de l'additif A sous forme de pastilles à l'aide d'une alimentation pondérale. Les débits des deux doseurs sont réglés de façon à avoir une concentration en additif A de 30% en poids. Le mélange est extrudé à un débit fixé à 8kg/h. Les températures des différentes plages de l'extrudeuse sont comprises entre 219 et 245°C. La vitesse est fixée à 390 rpm.

Les joncs obtenus sont dispersés dans de l'eau par une puissante agitation mécanique: la solution est mise en dispersion dans une cuve agitée (utilisation d'un broyeur colloïdal commercialisé par Fryma). La solution aqueuse est alors mise à décanter avec pompage de la mousse et du surnageant puis est filtrée sur un filtre plan sous vide pour éliminer l'additif A et les impuretés solides. Un stabilisateur thermique est ajouté aux joncs lavés.

Le slurry est ensuite séché par atomisation. Les atomiseurs utilisés sont le Niro Major pour l'exemple 1 et l'APV anhydro pour l'exemple 2, commercialisés par la société Niro et APV, respectivement. 0,1% en poids de silice T365, de la société Rhodia, est rajoutée pour favoriser la coulabilité. Un tamisage avec un tamis 100 microns est effectué. La distribution granulométrique des particules est mesurée à l'aide d'un appareil dénommé MasterSizer 2000 commercialisé par la société Malvern instruments. Cette distribution, exprimée en volume, obtenue après application d'ultrasons, est unimodale et centrée sur un diamètre de particules de 50 microns.

Les caractéristiques des particules obtenues sont les suivantes :

| | **Poudre 1** | **Poudre 2** |
|---|---|---|
| Facteur de sphéricité | 0,92 | 0,93 |
| Porosité intraparticulaire (pour des tailles de pores > 0,01 $\mu$m à 1 $\mu$m) | <0,02 ml/g | <0,02 ml/g |
| Surface spécifique (pour des tailles de pores > 0,01 $\mu$m) | 1,7 $m^2$/g | 2,4 $m^2$/g |
| Distribution granulométrique D50 | 55 $\mu$m | 50 $\mu$m |
| Distribution granulométrique (D90-D10) / D50 | 0,94 | 1,06 |
| Densité apparente | 640 g/l | 605 g/l |
| Densité tapée | 714 g/l | 694 g/l |
| Coulabilité | 46 | 58 |

### Exemple 2 : fabrication d'un article par frittage laser

Les particules de l'exemple 1 sont ensuite frittées sur une machine de type prototypage laser commercialisée

par la société EOS, modèle 360. Les particules sont disposées dans deux bacs adjacents à la surface de travail et chauffées à une température de 160°C. Les particules sont amenées sur la surface de travail à l'aide d'un rouleau en couche de 100-150 microns. La surface de travail est chauffée à une température comprise entre 195 et 200°C. Un laser d'une puissante de 25W apporte l'énergie complémentaire nécessaire au frittage des particules.

Une fois la première couche frittée, la surface de travail est abaissée et le rouleau dépose ensuite une deuxième couche de poudre sur la surface de travail et ainsi de suite jusqu'à obtention de l'article final. Des éprouvettes ont été réalisées sans difficulté selon ce mode de fabrication.

La densité mesurée est comprise entre 1,129 et 1,137. La densité théorique est égale à 1,143.

On observe ainsi la fabrication d'articles par frittage laser présentant une densité et des propriétés mécaniques quasiment équivalentes à des mêmes articles fabriqués par injection.

## Revendications

**1.** Procédé de fabrication d'article façonné par fusion sélective de couches d'une poudre à base de polymères thermoplastiques présentant les caractéristiques suivantes :

- une distribution granulométrique des particules d50 comprise entre 20 et 100 μm, et répondant également à la relation suivante : (d90-d10)/d50 comprise entre 0,85-1,2 ;

**caractérisé en ce que** la poudre présente:

- un facteur de sphéricité compris entre 0,8 et 1 ; et
- une porosité intra-particulaire inférieure à 0,05 ml/g pour des tailles de pores comprises entre 0,01 μm et 1μm, ladite porosité intra-particulaire étant déterminée par porosimétrie mercure à l'aide d'un appareil Autopore IV de la société Micromeritics, utilisant une gamme de pression de 0,003 MPa à 400 MPa.

**2.** Procédé selon la revendication 1, **caractérisé en ce que** la poudre est fabriqué par :

a) mélange en fondu d'un polymère thermoplastique avec un composé A constitué par un matériau polymérique comprenant au moins une partie de sa structure compatible avec ledit polymère thermoplastique et au moins une partie de sa structure non compatible et insoluble dans ledit polymère thermoplastique, pour obtenir une dispersion de particules discrètes de polymère thermoplastique ;
b) refroidir ledit mélange à une température inférieure à la température de ramollissement du polymère thermoplastique,
c) traiter ledit mélange refroidi pour provoquer le délitement des particules de polymère thermoplastique.

**3.** Procédé selon la revendication 1 ou 2, **caractérisé en ce que** le polymère thermoplastique est choisi dans le groupe comprenant les polyoléfines, notamment le polyéthylène et le polypropylène, les polychlorures de vinyle, les polyéthylènes téréphtalate, les polystyrènes, les polyamides, et les acryliques.

**4.** Procédé selon l'une quelconque des revendications 1 à 3, **caractérisé en ce que** le polymère thermoplastique est choisi parmi le polyamide 6, le polyamide 6,6, leurs mélanges et copolymères

**5.** Procédé selon l'une quelconque des revendications précédentes, **caractérisé en ce que** la poudre présente un facteur de sphéricité compris entre 0,9 et 1.

**6.** Procédé selon l'une quelconque des revendications précédentes, **caractérisé en ce que** la poudre présente une distribution granulométrique des particules d50 comprise entre 30 et 70 μm.

**7.** Procédé selon l'une quelconque des revendications précédentes, **caractérisé en ce que** la poudre présente une distribution granulométrique (d90-d10)/d50 comprise entre 0,9 et 1,2.

**8.** Procédé selon l'une quelconque des revendications précédentes, **caractérisé en ce que** la poudre présente une porosité intra-particulaire inférieure à 0,02 ml/g.

**9.** Procédé selon l'une quelconque des revendications précédentes, **caractérisé en ce que** la poudre présente une coulabilité comprise entre 30 et 60, ladite coulabilité étant mesurée par cisaillement d'un échantillon par cellule

annulaire.

**10.** Procédé selon l'une quelconque des revendications précédentes, **caractérisé en ce que** la poudre présente une densité apparente comprise entre 500 et 700 g/l et une densité tapé comprise entre 550 et 800 g/l.

**11.** Procédé selon l'une quelconque des revendications précédentes, **caractérisé en ce que** l'article comprend un ou plusieurs additifs ou composés choisis dans le groupe comprenant les matifiants, les stabilisants chaleur, les stabilisants lumière, les pigments, les colorants, les charges de renfort, notamment des charges abrasives, les nucléants, et les agents de renfort du choc.

**12.** Procédé selon l'une quelconque des revendications précédentes, **caractérisé en ce que** ledit procédé de fabrication d'article façonné par fusion sélective de couches est un procédé de prototypage rapide par frittage à l'aide d'un laser.

## Patentansprüche

**1.** Verfahren zur Herstellung eines Artikels, das durch die selektive Fusion von Schichten aus einem Pulver auf Basis von thermoplastischen Polymeren mit folgenden Eigenschaften geformt wird:

- eine Partikelgrößenverteilung d50 zwischen 20 und 100 $\mu$m, die zudem folgende Gleichung erfüllt: (d90-d10)/d50 zwischen 0,85 und 1,2;

**dadurch gekennzeichnet, dass** das Pulver Folgendes aufweist:

- einen Sphärizitätsfaktor zwischen 0,8 und 1; und
- eine intrapartikuläre Porosität von unter 0,05 ml/g für Porengrößen zwischen 0,01 $\mu$m und 1 $\mu$m, wobei die intrapartikuläre Porosität mittels Quecksilberporosimetrie mit einem Gerät Autopore IV des Unternehmens Micromeritics unter Verwendung eines Druckbereichs von 0,003 MPa bis 400 MPa bestimmt wird.

**2.** Verfahren nach Anspruch 1, **dadurch gekennzeichnet, dass** das Pulver hergestellt wird durch:

a) im geschmolzenen Zustand Mischen eines thermoplastischen Polymers mit einer Verbindung A, die aus einem Polymerwerkstoff gebildet ist, bei dem mindestens ein Teil seiner Struktur kompatibel ist mit dem thermoplastischen Polymer und mindestens ein Teil seiner Struktur nicht kompatibel und unlöslich in dem thermoplastischen Polymer ist, um eine feine Verteilung von einzelnen thermoplastischen Polymerpartikeln zu erhalten;
b) Kühlen der Mischung auf eine Temperatur unter der Erweichungstemperatur des thermoplastischen Polymers,
c) Behandeln der abgekühlten Mischung, um den Zerfall der thermoplastischen Polymerpartikel zu bewirken.

**3.** Verfahren nach Anspruch 1 oder 2, **dadurch gekennzeichnet, dass** das thermoplastische Polymer aus der Gruppe umfassend Polyolefine, insbesondere Polyethylen und Polypropylen, Polyvinylchloride, Polyethylenterephthalate, Polystyrole, Polyamide und Acryle ausgewählt wird.

**4.** Verfahren nach einem der Ansprüche 1 bis 3, **dadurch gekennzeichnet, dass** das thermoplastische Polymer ausgewählt wird aus Polyamid 6, Polyamid 6,6, ihren Mischungen und Copolymeren.

**5.** Verfahren nach einem der vorhergehenden Ansprüche, **dadurch gekennzeichnet, dass** das Pulver einen Sphärizitätsfaktor zwischen 0,9 und 1 aufweist.

**6.** Verfahren nach einem der vorhergehenden Ansprüche, **dadurch gekennzeichnet, dass** das Pulver eine Partikelgrößenverteilung d50 zwischen 30 und 70 $\mu$m aufweist.

**7.** Verfahren nach einem der vorhergehenden Ansprüche, **dadurch gekennzeichnet, dass** das Pulver eine Korngrößenverteilung (d90-d10)/d50 zwischen 0,9 und 1,2 aufweist.

**8.** Verfahren nach einem der vorhergehenden Ansprüche, **dadurch gekennzeichnet, dass** das Pulver eine intrapartikuläre Porosität von unter 0,02 ml/g aufweist.

9. Verfahren nach einem der vorhergehenden Ansprüche, **dadurch gekennzeichnet, dass** das Pulver eine Fließfähigkeit zwischen 30 und 60 aufweist, wobei die Fließfähigkeit mittels Scherverformung einer Probe mit einer Ringzelle gemessen wird.

10. Verfahren nach einem der vorhergehenden Ansprüche, **dadurch gekennzeichnet, dass** das Pulver eine Schüttdichte zwischen 500 und 700 g/l und eine Klopfdichte zwischen 550 und 800 g/l aufweist.

11. Verfahren nach einem der vorhergehenden Ansprüche, **dadurch gekennzeichnet, dass** der Artikel ein oder mehrere Zusatzstoffe oder Verbindungen umfasst, die aus der Gruppe umfassend Mattierungsmittel, Hitzestabilisatoren, Lichtstabilisatoren, Pigmente, Farbstoffe, Verstärkungsfüllstoffe, insbesondere abrasive Füllstoffe, Nukleierungsmittel und Schlagverstärkungsmittel ausgewählt werden.

12. Verfahren nach einem der vorhergehenden Ansprüche, **dadurch gekennzeichnet, dass** das Verfahren zur Herstellung eines Artikels, der durch die selektive Fusion von Schichten geformt wird, ein Rapid-Prototyping-Verfahren mittels Lasersintern ist.

## Claims

1. Method for manufacturing an article by selective fusion of thermoplastic polymer powder layers, having the following characteristics:

   - a d50 particle size distribution of between 20 and 100 μm, and also satisfying the following equation: (d90-d10)/d50 between 0.85 and 1.2; **characterized in that** the powder has:
   - a sphericity factor of between 0.8 and 1; and
   - an intraparticle porosity lower than 0.05 ml/g, for pore sizes between 0.01 μm and 1 μm, said intraparticle porosity being determined by mercury porosimetry using an Autopore IV instrument from Micromeritics, using a range of pressure of 0.003 MPa to 400 MPa.

2. Method according to Claim 1, **characterized in that** the powder is manufactured by:

   a) mixing a molten thermoplastic polymer with a compound A consisting of a polymeric material whereof at least part of the structure is compatible with said thermoplastic polymer and at least part of the structure is incompatible and insoluble in said thermoplastic polymer, for obtaining a dispersion of discrete particles of thermoplastic polymer;
   b) cooling said mixture to a temperature lower than the softening point of the thermoplastic polymer,
   c) treating said cooled mixture to make the particles of thermoplastic polymer disintegrate.

3. Method according to either of Claims 1 and 2, **characterized in that** the thermoplastic polymer is selected from the group comprising polyolefins, in particular polyethylene and polypropylene, polyvinyl chlorides, polyethylene terephthalates, polystyrenes, polyamides, and acrylics.

4. Method according to any one of Claims 1 to 3, **characterized in that** the thermoplastic polymer is selected from nylon 6, nylon 6-6, mixtures and copolymers thereof.

5. Method according to any one of the preceding claims, **characterized in that** the powder has a sphericity factor of between 0.9 and 1.

6. Method according to any one of the preceding claims, **characterized in that** the powder has a d50 particle size distribution of between 30 and 70 μm.

7. Method according to any one of the preceding claims, **characterized in that** the powder has a (d90-d10)/d50 particle size distribution of between 0.9 and 1.2.

8. Method according to any one of the preceding claims, **characterized in that** the powder has an intraparticle porosity lower than 0.02 ml/g.

9. Method according to any of the preceding claims, **characterized in that** the powder has a flowability of between

30 and 60, said flowability being measured by shearing a sample of the ring shear tester.

**10.** Method according to any one of the preceding claims, **characterized in that** the powder has an apparent density of between 500 and 700 g/l and a packed density of between 550 and 800 g/l.

**11.** Method according to any one of the preceding claims, **characterized in that** the article comprises one or more additives or compounds selected from the group comprising mattifiers, heat stabilizers, light stabilizers, pigments, dyes, reinforcing fillers, in particular abrasive fillers, nucleating agents, and impact reinforcement agents.

**12.** Method according to any one of the preceding claims, **characterized in that** said method for manufacturing an article by selective fusion of layers is a method for rapid prototyping by sintering using a laser.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6136948 A
- WO 9606881 A
- US 20040138363 A
- FR 2907366
- EP 1797141 A
- WO 2007115977 A
- FR 2743077
- FR 2779730
- US 5959069 A
- EP 632703 A
- EP 682057 A
- EP 832149 A
- WO 03002668 A
- WO 0068298 A
- WO 0138061 A
- EP 1015214 A
- DE 10311438


### Littérature non-brevet citée dans la description


- **GOMEZ F. ; DENOYEL R. ; ROUQUEROL J.** *Langmuir,* 2000, vol. 16, 3474
- **WASHBURN E.W.** *Proc. Nat. Acad. Sci.,* 1921, vol. 7, 115-6
- **ROOTARE H.M. ; PRENZLOW C.F.** *J. Phys. Chem.,* 1967, vol. 71, 2733-6
- Standard shear testing technique for particulate solids using the Jenike shear cell. The institution of Chemical Engineers, 1989